# EUROPEAN PATENT SPECIFICATION

(11) **EP 2 395 251 B1**
(45) Date of publication and mention of the grant of the patent: **10.04.2013**
(21) Application number: 10006015.1
(22) Date of filing: 10.06.2010
(51) Int. Cl.: F16B 25/10, F16B 35/06

(54) **Crack-proof screw**
Risssichere Schraube
Vis résistant aux fissures

(43) Date of publication of application: 14.12.2011
(73) Proprietor: Fong Prean Industrial Co., Ltd., Kaohsiung Hsien (TW)
(72) Inventor: Lin, Teng-Hung, Kaohsiung Hsien (TW)
(74) Representative: Treeby, Philip David William

(56) References cited:
- EP-A1- 0 824 198
- DE-A1-102006 023 025
- US-A- 2 242 758
- US-A- 4 874 278

## Description

### FIELD OF THE INVENTION

The present invention relates to screws, and in particular to a crack-proof screw which includes a rod thread, expanding threads and drilling threads. The screw of the present invention can drill an object quickly with less force and achieve the object of the crack-proof.

### BACKGROUND OF THE INVENTION

Many design ways are used in designs of screws, such as single section, double sections, single thread, double threads, single diameter, double diameters, single pitch angle, double pitch angles, etc. All these designs present different effects in use of screws, such as the effects of drilling speeds, dregs removing, and retaining.

In the design of the screws, the designs of screws are based on the characters of the material and the object to be drilled. Generally, screws are made of different material, such as woods, plastics, metals, compound materials, etc. For a screw screwing into a wood, due to the property of the wood, it is often that the wood will crack. Thus it is necessary to have screws which have the property of crack proof.

US 4,874,278 discloses a wood screw comprising a head for receiving a fastening tool and a shank extending from the head. The shank is provided at the tip thereof with a tip guide portion adapted to penetrate an article to be fastened while boring a hole into the article such as timber. The shank is provided at the head side thereof with a fastening screw portion having at least a single screw thread. A chips removing screw portion is disposed between the tip guide portion and the fastening screw portion. The chips removing screw portion has screw threads, the number of which is greater than that of the fastening screw portion.

### SUMMARY OF THE INVENTION

The object of the present invention is to provide a crack-proof screw which includes a rod thread, expanding threads and drilling threads. The screw of the present invention can drill an object quickly with less force and achieve the object of the crack-proof.

To achieve above object, the present invention provides a crack-proof screw comprising: a head; a rod having a first end extending from the head and having a rod thread near the head and expanding threads far away from the head; each expanding thread encircled through an angle smaller than 360 degrees; the screwing direction of the expanding thread being identical to or different from that of the rod thread; an angle A being defined an angle between an upper side of each expanding thread and a line vertical to a surface of the rod; an angle B being defined an angle between an lower side of each expanding thread and a line vertical to a surface of the rod; the angle B being greater than the angle A and the summation of the angle B and angel A being equal to or greater than 90 degrees; and a tapered tail extending from a second end of the head; the expanding threads on the rod being near the tapered tail; the tapered tail having two drilling threads; each drilling thread can be extended to or not extended to the tip end of the tapered tail.

Preferably the head has a lateral surface which is formed with an axial annular outer ring at an upper side thereof; an upper annular area of the annular outer ring being a flat ring portion and a lower annular area of the annular outer ring being a ratchet tooth area; a lower side of the lateral surface of the head being formed with ratchet teeth.

The various objects and advantages of the present invention will be more readily understood from the following detailed description when read in conjunction with the appended drawing.

### BRIEF DESCRIPTION OF THE DRAWINGS

Fig. 1 shows the structure of the present invention.
Fig. 2 is a cross sectional view viewed from the line 2-2 of Fig. 1.
Fig. 3 is a schematic view showing the angles relations of the upper side and the lower side of the expanding thread.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

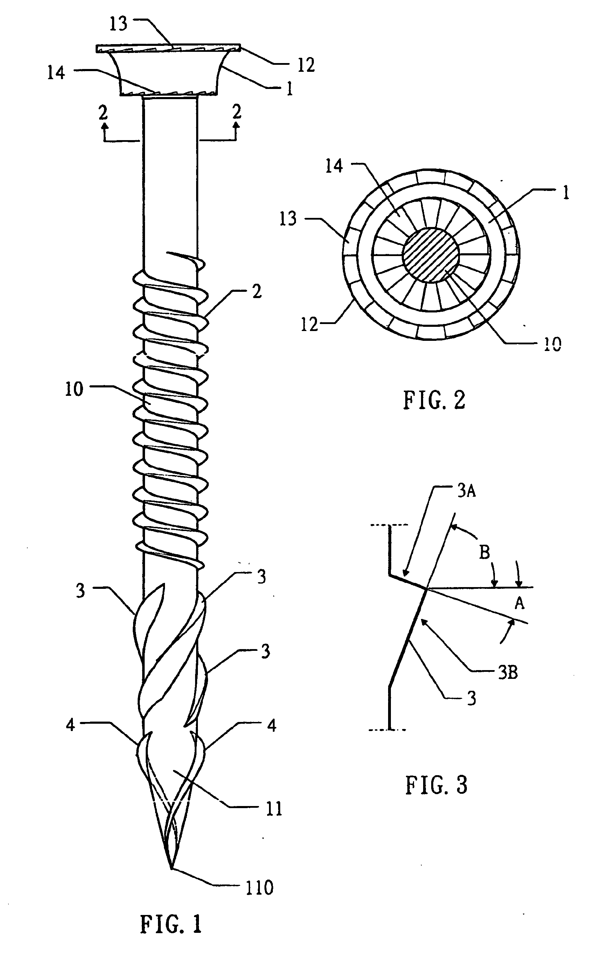

Referring to Fig. 1, the embodiment of the present invention is illustrated. The crack-proof screw of the present invention includes the following elements.

A head 1 has a lateral surface which is formed with an axial annular outer ring at an upper side thereof. An upper annular area of the annular outer ring is a flat ring portion 12 and a lower annular area of the annular outer ring is a ratchet tooth area 13. A lower side of the lateral surface of the head 1 is formed with ratchet teeth 14. However, within the scope of the present invention, the head 1 may have other form which is not used to confine the scope of the present invention.

A rod 10 has a first end extending from the head 1 and has a rod thread 2 near the head 1 and expanding threads 3 far away from the head 1.

Each expanding thread 3 is encircled through an angle smaller than 360 degrees. The screwing direction of the expanding thread 3 is identical to or different from that of the rod thread 2. An angle A is defined an angle between an upper side 3A of each expanding thread 3 and a line vertical to a surface of the rod 10. An angle B is defined an angle between a lower side 3B of each expanding thread 3 and a line vertical to a surface of the rod 10. In that, the angle B is greater than the angle A and the summation of the angle B and angel A is equal to or greater than 90 degrees.

A tapered tail 11 extends from a second end of the head 1. The expanding threads 3 on the rod 10 are near the tapered tail 11. The tapered tail 11 has two drilling threads 4. Each drilling thread 4 can be extended to or not extended to the tip end 110 of the tapered tail 11.

Thus, by the structure of the present invention, the designs of the rod thread 2, the expanding threads 3 and the drilling threads 4, the screw of the present invention can drill an object quickly with less force and achieve the object of the crack-proof.

## Claims

1. A crack-proof screw comprising:
a head (1);
a rod (10) having a first end extending from the head (1) and having a rod thread (2) near the head (1) **characterised in that**
the rod has expanding threads (3) far away from the head (1);
each expanding thread (3) encircled through an angle smaller than 360 degrees; the screwing direction of the expanding thread (3) being identical to or different from that of the rod thread (2); an angle A being defined an angle between an upper side (3A) of each expanding thread (3) and a line vertical to a surface of the rod (10); an angle B being defined an angle between an lower side (3B) of each expanding thread (3) and a line vertical to a surface of the rod (10); the angle B being greater than the angle A and the summation of the angle B and angel A being equal to or greater than 90 degrees; and
a tapered tail (11) extending from a second end of the head (1); the expanding threads (3) on the rod (10) being near the tapered tail (11); the tapered tail (11) having two drilling threads (4); each drilling thread (4) can be extended to or not extended to the tip end (110) of the tapered tail (11).

2. A crack-proof screw according to claims 1, wherein:
the head (1) has a lateral surface which is formed with an axial annular outer ring at an upper side thereof; an upper annular area of the annular outer ring being a flat ring portion (12) and a lower annular area of the annular outer ring being a ratchet tooth area (13); a lower side of the lateral surface of the head (1) being formed with ratchet teeth (14).

## Patentansprüche

1. Risssichere Schraube, umfassen:
einen Kopf (1);
eine Stange (10) mit einem ersten Ende, das von dem Kopf (1) verläuft, und mit einem Stangengewinde (2) in der Nähe des Kopfs (1), **dadurch gekennzeichnet, dass**
die Stange Expansionsgewinde (3) weit weg von dem Kopf (1) aufweist;
jedes Expansionsgewinde (3) über einen Winkel von weniger als 360 Grad abgegrenzt ist; wobei die Schraubrichtung des Expansionsgewindes (3) identisch mit jener des Stangengewindes (2) ist oder davon abweicht; wobei ein Winkel A als Winkel zwischen einer Oberseite (3A) von jedem Expansionsgewinde (3) und einer vertikalen Linie zu einer Oberfläche der Stange (10) definiert ist; wobei ein Winkel B als Winkel zwischen einer Unterseite (3B) von jedem Expansionsgewinde (3) und einer vertikalen Linie zu einer Oberfläche der Stange (10) definiert ist; wobei der Winkel B größer als der Winkel A ist und die Summierung des Winkels B und Winkels A gleich oder größer als 90 Grad ist; und
ein kegelförmiges hinteres Ende (11) von einem zweiten Ende des Kopfs (1) verläuft; wobei die Expansionsgewinde (3) an der Stange (10) in der Nähe des kegelförmigen hinteren Endes sind; wobei das kegelförmige hintere Ende (11) zwei Bohrköpfe (4) aufweist; wobei jeder Bohrkopf (4) zu dem Spitzenende (110) des kegelförmigen hinteren Endes (11) ausgedehnt oder nicht ausgedehnt sein kann.

2. Risssichere Schraube nach Anspruch 1, wobei:
der Kopf (1) eine Seitenfläche aufweist, die mit einem axialen runden Außenring an einer Oberseite davon ausgebildet ist; ein oberer runder Bereich des runden Außenrings ein flacher Ringabschnitt (12) ist und ein unterer runder Bereich des runden Außenrings ein Ratschenzahnbereich (13) ist; eine Unterseite der Seitenfläche des Kopfs (1) mit Ratschenzähnen (14) ausgebildet ist.

## Revendications

1. Vis résistant aux fissures comportant :
une tête (1) ;
une tige (10) présentant une première extrémité s'étendant à partir de la tête (1) et ayant un filetage de tige (2) à proximité de la tête (1), **caractérisée en ce que**
la tige comporte des filets en extension (3) situés à distance de la tête (1) ;
chaque filet en extension (3) formant un entourage sur un angle plus petit que 360 degrés ;
la direction de vissage du filet en extension (3) étant identique à, ou différente de, celle du filet de la tige (2) ; un angle A définissant un angle compris entre un côté supérieur (3A) de chaque filet en extension (3) et une ligne perpendiculaire à une surface de la tige (10) ; an angle B définissant un angle compris entre côté inférieur (3B) de chaque filet d'extension (3) et une ligne verticale à une surface de la tige (10) ; l'angle B étant plus grand que l'angle A et la somme de l'angle B et de l'angle A étant égale ou supérieure à 90 degrés ; et
une extrémité conique (11) s'étendant à partir de la seconde extrémité de a tête (1) ; les filets en extension (3) sur la tige (10) étant proches de l'extrémité conique (11) ; l'extrémité conique (11) présentant deux filets de perçage (4) ; chaque filet de perçage (4) peut être étendu, ou ne pas être étendu, jusqu'à l'extrémité en pointe (110) de l'extrémité conique (11).

2. Vis résistant aux fissures selon la revendication 1, dans laquelle :
la tête (1) présente une surface latérale qui est formée avec une bague extérieure annulaire axiale au niveau d'un côté supérieur de celle-ci ; une surface annulaire supérieure de la bague annulaire extérieure étant une partie de bague plane (12) et une surface annulaire inférieure de la bague annulaire extérieure étant une surface en dent de rochet (13) ; un côté inférieur de la surface latérale de la tête (1) étant formé avec des dents de rochet (14).
